Europäisches Patentamt

European Patent Office

Office européen des brevets

(19)

(11) Veröffentlichungsnummer: **0 097 769**
**B1**

(12) # EUROPÄISCHE PATENTSCHRIFT

(45) Veröffentlichungstag der Patentschrift:
04.06.86

(51) Int. Cl.⁴: **A 01 K  7/06**

(21) Anmeldenummer: **83102575.4**

(22) Anmeldetag: **16.03.83**

(54) **Ventil für Tiertränken.**

(30) Priorität: **30.06.82  DE 8218670 U**

(43) Veröffentlichungstag der Anmeldung:
**11.01.84 Patentblatt 84/2**

(45) Bekanntmachung des Hinweises auf die Patenterteilung:
**04.06.86 Patentblatt 86/23**

(84) Benannte Vertragsstaaten:
**AT BE CH DE FR IT LI SE**

(56) Entgegenhaltungen:
**DE - A - 2 900 161**
**DE - U - 8 218 670**

(73) Patentinhaber: **SUEVIA HAIGES GMBH & CO.,**
**Postfach 1108 Max-Eyth-Strasse,**
**D-7125 Kirchheim/Neckar (DE)**

(72) Erfinder: **Haiges, Adolf, Hölderlinstrasse 10,**
**D-7124 Bönnigheim (DE)**

(74) Vertreter: **Wolff, Michael, Dipl.-Phys., Kirchheimer**
**Strasse 69, D-7000 Stuttgart 75 (DE)**

## Beschreibung

Die Erfindung betrifft ein gegen den Wasserdruck schliessendes Ventil für Tiertränken, mit kolinearer Anordnung einer an der Tränke befestigten Hülse für den Wasserzulauf, welche mit einem ringförmigen Ventilsitz und einer axialen ringförmigen Aussenschulter versehen ist, deren Durchmesser grösser sind als die Durchmesser des Ventilsitzes; und eines Ventilbetätigungsrohres für den Wasserablauf, welches einen federbelasteten Ventilkörper trägt, der infolge seitlichen Auslenkens des hülsenfernen Rohrendes durch Kippen vom Ventilsitz abhebt.

Bei einem aus der DE-A-2 900 161 bekannten Ventil dieser Art ist die axiale ringförmige Schulter der Hülse als Anschlag für eine auf die Hülse geschraubte Buchse vorgesehen, die einen das Betätigungsrohr im Abstand umschliessenden Innenflansch aufweist, an dem sich eine auf dem Betätigungsrohr sitzende, auf Druck beanspruchte Schraubenfeder abstützt, die an einem den Ventilkörper umgebenden Aussenflansch des Betätigungsrohres innerhalb der Hülse angreift. Zum Abstellen des Ventils kann eine ausserhalb der Hülse auf dem Betätigungsrohr sitzende Schiebebuchse auf die an der Hülse festgelegte Buchse aufgeschraubt werden.

An dem bekannten Ventil ist nachteilig, dass die lichte Weite der Hülse in Höhe des ringförmigen Ventilsitzes den Wasserdurchfluss bestimmt, der sich je nach Auslenkung des Ventilbetätigungsrohres einstellt. Dieser Durchfluss ist insbesondere bei Niederdruck des Wassers meistens ungenügend, wenn nicht oft-unbrauchbare Hülsendurchmesser vorgesehen werden. In jedem Fall hebt der Ventilkörper, weil er sich am Ventilsitz abstützen muss, nicht vollständig vom Ventilsitz ab, so dass ein Wasserdurchfluss an der Abstützstelle unmöglich ist. Die reibungsbelastete Relativbewegung der Teile führt zu vermeidbarem Verschleiss.

Der Erfindung liegt daher die Aufgabe zugrunde, ein diese Nachteile vermeidendes Ventil für Tiertränken zu schaffen, welches auch bei Niederdruck einen hohen Wasserdurchfluss ermöglicht.

Diese Aufgabe ist bei einem Ventil der eingangs genannten Art erfindungsgemäss dadurch gelöst, dass die schulternahe Stirnfläche des Betätigungsrohres an der Aussenschulter der Hülse axial abstützbar ist.

Dadurch wird vorteilhafterweise erreicht, dass bei einer bestimmten lichten Weite des Ventilsitzes und bei einer bestimmten Auslenkung des Ventilbetätigungsrohres infolge der radial nach aussen verlagerten Abstützung, nun nicht mehr des Ventilkörpers am Ventilsitz, sondern des Rohres an der Hülse, eine weitere Ventilöffnung als bisher vorhanden ist, so dass pro Zeiteinheit eine grössere Wassermenge durch das Ventil fliessen kann. Ausserdem hebt dadurch der Ventilkörper reibungsfrei vom Ventilsitz ab, so dass Abrieb unterbleibt.

Bei einer ersten Ausführungsform des erfindungsgemässen Ventils ist die Hülse mit einem die Schulter bildenden Aussenbund und das Rohr mit einer bezüglich der Hülse koaxialen, diese radial umfassenden Verlängerung versehen, deren bundnahe Stirnfläche auf dem Bund abstützbar ist. Dadurch ergibt sich ein relativ grosser Durchmesser der die Hülsenverlängerung abstützenden Schulter der Hülse und dementsprechend bei bestimmter Auslenkung des Ventilbetätigungsrohres eine verhältnismässig grosse Ventilöffnung.

Bei der ersten Ausführungsform des erfindungsgemässen Ventiles ist der Aussenbund der Hülse axial auf der Ventilkörperseite des Ventilsitzes angeordnet, damit der Ventilkörper beim Öffnen des Ventils vom Ventilsitz überall abhebt und nicht an einer dem Abstützpunkt naheliegenden Stelle am Ventilsitz reibt, wodurch der meist aus Gummi bestehende Ventilkörper verschlissen würde.

Bei der ersten Ausführungsform, deren Ventilbetätigungsrohr wie bei dem bekannten Ventil der eingangs genannten Art eine den Ventilkörper tragende, koaxiale Achse aufnimmt, ist das Rohr zur Einstellung des Spielraumes zwischen Bund und Rohrstirnfläche axial verstellbar auf der Achse gelagert. Die Bemessung des Spiels hat Einfluss auf den Ventilöffnungsvorgang und erlaubt daher eine, wenn auch eng begrenzte, Festlegung des Wasserdurchflusses.

Bei der ersten Ausführungsform, deren Ventilkörper eine ebene, kreisförmige Anlagefläche und deren Ventilsitz eine ringförmige Dichtfläche aufweist, wie es bei dem bekannten Ventil der eingangs genannten Art der Fall ist, ist der Ventilsitz mit einer axial neben der Dichtfläche liegenden, ringförmigen Aussparung zur Aufnahme des Randes der Anlagefläche versehen. Die Aussparung verhindert ein Anstossen des beim Öffnen des Ventils ein wenig zurückkippenden Randabschnittes des Ventilkörpers am Ventilsitz.

Bei der ersten Ausführungsform ist eine auf Druck beanspruchte, vorgespannte Schraubenfeder auf der Achse zwischen einem von der Achse durchquerten Stopfen, der an das rohrnahe Ende der Hülse geschraubt ist, und einem den Ventilkörper aufnehmenden Köcher angeordnet, welcher am hülsennahen Ende der Achse befestigt ist. Durch diese Ausgestaltung lässt sich das Ventil nach dem Entfernen des verlängerten Ventilbetätigungsrohres einfach demontieren, indem der Stopfen von der Hülse und der Köcher von der Achse beispielsweise abgeschraubt wird.

Bei einer zweiten Ausführungsform des erfindungsgemässen Ventils sind das Rohr und seine Verlängerung durch ein gekröpftes Übergangsstück miteinander verbunden, welches achsparallele Bohrungen für flankierenden Wasserablauf aufweist. Dank der Kröpfung genügen einfache Bohrungen, um das Innere mit dem Äusseren des Rohres in Wasserdurchflussrichtung zu verbinden.

Bei der zweiten Ausführungsform ist das Rohr drehfest auf der Achse gelagert und ist die Achse mit einem Gewinde versehen, auf das eine am Rohr angreifende Stellmutter geschraubt ist. Infolgedessen muss zum Einstellen des Spielraumes zwischen Bund und benachbarter Rohrstirnfläche nicht die Achse, beispielsweise an ihrem aus der Stellmutter herausragenden Ende, drehfest ergriffen werden, bevor die Mutter verstellt werden kann, sondern es genügt, wenn das bequem greifbare Rohr während des Drehens der Stellmutter festgehalten wird.

Bei der zweiten Ausführungsform ist die Hülse mit einer Überwurfmutter versehen, an welcher eine Aussenschulter ausgebildet ist, und legt die Überwurfmutter ein an die Hülse axial angeflanschtes Federgehäuse fest, das eine wendelförmige Ventilfeder aufnimmt. Bei dieser Ausgestaltung können die Ventilfeder und der Ventilkörper besonders leicht ausgewechselt werden, ohne dass dadurch die Wirkungsweise des Ventiles beeinträchtigt würde.

Bei der zweiten Ausführungsform ist das Rohr mit einem aufgeschraubten Stutzen versehen, der zwischen einer wirksamen Stellung, in der er in eine ortsfeste Ringfassung axial eingreift, und einer unwirksamen Stellung bewegbar ist, in welcher er von der Ringfassung axial zurückgezogen ist. Damit ist es möglich, das Vieh an einer Ventilbetätigung zu hindern, indem das Ventilbetätigungsrohr durch Verdrehen des Stutzens soweit verlängert wird, dass es mittels des Stutzens in die Ringfassung hineinragt, bei der es sich beispielsweise um eine Vertiefung im Boden eines Tränkebeckens handeln kann.

Bei der zweiten Ausführungsform ist vorgesehen, dass der Stutzen aus Kunststoffmaterial besteht und an seinem ventilnahen Ende mit einer radial inneren Ringrippe versehen ist, die in der wirksamen und unwirksamen Stutzenstellung jeweils in eine radial äussere Nut des Rohres radial entspannt eingreift. Die nur axial, aber nicht radial formschlüssige Verbindung des Stutzens mit dem ihn tragenden Rohr verrastet den Stutzen in seinen beiden Extremstellungen, so dass versehentliche Zwischenstellungen, die das Vieh sonst absichtlich oder unabsichtlich herbeiführen könnte, nicht möglich sind.

Bei einer dritten und vierten Ausführungsform des erfindungsgemässen Ventiles ist vorgesehen, dass die Hülse eine Innenschulter aufweist und das sich an dieser abstützende Rohrende radial umfasst. Dadurch ergibt sich im Vergleich zu den zwei anderen Ausführungsformen eine schlankere Gestalt bei gleichzeitig vermindertem Wasserdurchfluss, der aber genügt, weil diese dritte Ausführungsform dafür bestimmt und geeignet ist, mit seinem Rohr vom Vieh ins Maul genommen zu werden.

Bei der dritten und vierten Ausführungsform ist in das hülsenferne Rohrende eine achsparallel durchbrochene Scheibe mit einem zentralen, von der kreiszylindrischen Form abweichenden axialen Durchbruch eingeschraubt, in den die Achse drehfest eingreift, wobei die Stellmutter an der Scheibe angreift. Die eingeschraubte Scheibe zur drehfesten Verbindung des Rohres mit der Achse hat den Vorteil, dass das hülsenferne Rohrende keine angeformte Nabe für die Lagerung der Achse benötigt, so dass statt Kunststoffmaterial für das Rohr beissfestes Metall verarbeitet werden kann, aus dem eine mit dem Rohr einstückige Nabe nur unter besonderem Material- und Arbeitsaufwand ausgeformt werden könnte.

Die dritte und vierte Ausführungsform besitzen ein eine wendelförmige Ventilfeder aufnehmendes, in die Hülse geschraubtes Federgehäuse, das in das hülsennahe Rohrende beliebig weit eingreifen kann.

Bei der vierten Ausführungsform sind das wasserdurchströmte Federgehäuse und der Rand der Scheibe mittels eines die Achse aufnehmenden Schlauchstücks wasserleitend miteinander verbunden. Das Schlauchstück verhindert, dass zwischen Innenschulter der Hülse und der sich an ihr abstützenden Rohrstirnfläche Luft von aussen in das Rohr eingesaugt wird, die das aus dem Rohr strömende Wasser sonst schäumen lassen würde.

Bei der dritten Ausführungsform ist das Ventilgehäuse an seinem hülsenfernen Ende mit einer axial verstellbar angeschraubten, durchbrochenen Druckschraube versehen, an der sich die Ventilfeder abstützt. Mittels der Druckschraube lässt sich die Schliesskraft des Ventiles einfach einstellen und damit dem herrschenden Wasserdruck anpassen.

Bei der dritten und vierten Ausführungsform ist die Stellmutter innerhalb des Rohres angeordnet, damit das Vieh beim Aufnehmen des Rohres in das Maul nicht mit der Zunge an der Stellmutter dreht.

Im folgenden ist die Erfindung anhand der durch die Zeichnung beispielhaft dargestellten vier Ausführungsformen des erfindungsgemässen Ventiles im einzelnen erläutert. Es zeigt:

Fig. 1 einen axialen Längsschnitt durch die vertikal angeordnete erste Ausführungsform;

Fig. 2 eine entsprechende Darstellung der zweiten Ausführungsform;

Fig. 3 eine geschnitten teilweise in zwei Zuständen dargestellte Seitenansicht der zweiten Ausführungsform;

Fig. 4 einen axialen Längsschnitt durch die horizontal angeordnete dritte Ausführungsform, von der einige Teile weggelassen sind;

Fig. 5 eine perspektivische Ansicht eines Teils der dritten Ausführungsform in Explosionsdarstellung, und

Fig. 6 eine Fig. 4 entsprechende vollständige Darstellung der vierten Ausführungsform.

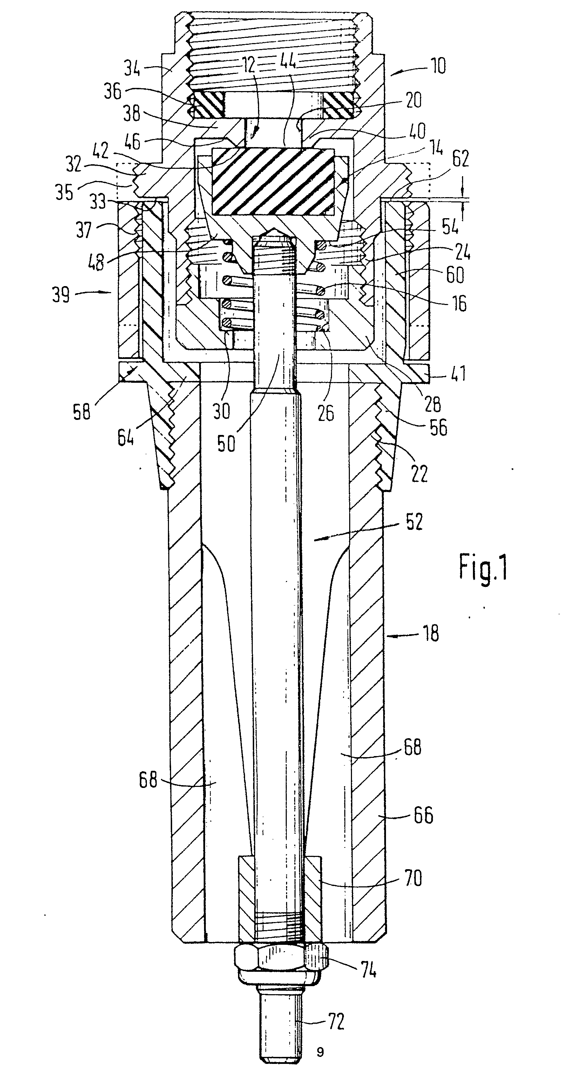

Die erste Ausführungsform des erfindungsgemässen Ventiles besteht nach Fig. 1 hauptsächlich aus einer kreiszylindrischen Hülse 10 mit Ventilsitz 12, aus einem mit diesem zusammenwirkenden Ventilkörper 14, der von einer Schraubenfeder 16 beaufschlagt wird, und aus einem kreiszylindrischen, glatten Rohr 18 zur Ventilbetätigung. Die Hülse 10, eine Bohrung 20 des Ventilsitzes 12, der kreisscheibenförmige Ventilkörper 14, die Schraubenfeder 16 und das Rohr 18 sind koaxial beziehungsweise kolinear angeordnet.

Die Hülse 10 weist an ihrem dem oberen Ende 22 des Rohres 18 benachbarten unteren Ende 24 ein Innengewinde auf, in das ein mit einer abgestuften zentralen Bohrung 26 versehener Stopfen 28 geschraubt ist, an dessen Innenschulter 30 das untere Ende der Feder 16 sich abstützt. Unterhalb des Ventilsitzes 12 ist die Hülse 10 mit einem Aussenbund 32 versehen, der an seiner Unterseite eine Schulter 33 und an seinem Umfang ein Gewinde 35 aufweist, auf welches das Innengewinde 37 eines axial verschiebbaren Ringes 39 schraubbar ist, der in seiner unwirksamen Lage auf einem Aussenbund 41 ruht.

Das obere Ende 34 der Hülse 10 ist ebenfalls mit einem Innengewinde zum Einschrauben eines Wasserleitungsendes versehen, das einen Dichtungsring 36 gegen die Oberseite des Ventilsitzes 12 presst.

Der Ventilsitz 12 ist an einem Innenbund 38 ausgebildet, der zusammen mit einem ringförmigen, aussen konischen Vorsprung 40 nach unten die Wandung der Bohrung 20 bildet. Der Vorsprung 40 weist an seiner Unterseite eine ebene Dichtfläche 42 auf, die mit der ebenen, kreisförmigen Anlagefläche 44 an der Oberseite des Dichtkörpers 14 zusammenwirkt, und ist mit einer von ihm selbst und von dem Innenbund 38 gebildeten, ringförmigen Aussparung 46 versehen.

Der Ventilkörper 14 besteht aus Gummi und ist mit Presssitz in einen Köcher 48 eingefügt, der unterhalb des Ventilsitzes 12 in der Hülse 10 angeordnet ist. Der aussen als zylindrischer Sechskant geformte Köcher 48 ist an seiner Unterseite auf das aus dem Rohr 18 oben herausragende obere Ende 50 einer bezüglich des Rohres 18 koaxialen Achse 52 geschraubt und bildet mit einer Aussenschulter 54 das Widerlager für das obere Ende der Schraubenfeder 16, die das obere Achsende 50 umgibt, das sich durch die Bohrung 26 des Stopfens 28 erstreckt. Der Ventilkörper 14 ragt oben aus dem Köcher 48 heraus und kann mit seinem überstehenden Rand, der die Dichtfläche 42 des Ventilsitzes 12 radial umgibt, in die Aussparung 46 eingreifen, wenn er gekippt wird.

Die auf Druck beanspruchte Schraubenfeder 16 ist im Schliesszustand des Ventiles dem Wasserdruck entsprechend vorgespannt.

Das Ventilbetätigungsrohr 18 ist an seinem oberen Ende 22 mit einem Aussengewinde versehen, auf welches das Innengewinde des unteren Abschnittes 56 einer hülsenförmigen Verlängerung 58 des Rohres 18 geschraubt ist, deren oberer Abschnitt 60 das untere Ende 24 der Hülse 10 umschliesst und eine obere Stirnfläche 62 aufweist, die der unteren Schulter 33 des Aussenbundes 32 der Hülse 10 mit geringem Spiel axial gegenübersteht. Die benachbarten Aussenkanten des Aussenbundes 32 und der Stirnfläche 62 sind je mit einer Phase versehen. Der obere Abschnitt 60 der Rohrverlängerung 58 wird mit geringem Spiel vom Ring 39 umfasst, der axial nahe an die Stirnfläche 62 heranreicht.

Ein die beiden Abschnitte der Verlängerung 58 trennender Innenbund 64 derselben, durch den die Achse 52 greift, bildet einen Anschlag beim Einschrauben des Rohres 18 in dessen Verlängerung 58. Aussen- und Innenbund 41 bzw. 64 befinden sich axial an derselben Stelle. Das untere Ende 66 des Rohres 18 ist mit einer mittels Lamellen 68 gelagerten Buchse 70 versehen, die das aus dem unteren Rohrende 66 herausragende untere Ende 72 der Achse 52 aufnimmt. Das untere Achsende 72 weist einen Gewindeabschnitt auf, auf den eine die Buchse 70 unterstützende Stellmutter 74 geschraubt ist, deren axiale Lage die Spielraum zwischen der Aussenschulter 33 der Hülse 10 und der Stirnfläche 62 der Rohrverlängerung 58 bestimmt.

Die Wirkungsweise der beschriebenen ersten Ausführungsform ist folgende:

Ausgehend von dem gezeichneten Schliesszustand des Ventils wird dieses geöffnet, sobald das zu tränkende Tier das Ventilbetätigungsrohr 18 ins Maul nimmt oder mit seiner Schnauze an dieses Rohr stösst, so dass es seitlich ausgelenkt wird. Dabei stützt sich die Stirnfläche 62 der Rohrverlängerung 58 an einer von der Auslenkungsrichtung abhängigen Stelle der Aussenschulter 33 der Hülse 10 ab, während an der diametral gegenüberliegenden Stelle des Aussenbundes sich diese Stirnfläche am weitesten vom Bund entfernt. Infolgedessen hebt der Ventilkörper 14 in einer Schwenkbewegung gegen die Rückstellkraft der Feder 16 reibungsfrei vom Ventilsitz 12 ab, so dass das Wasser durch das obere Hülsenende 34, den Ventilsitz 12, an dem mit reichlich Spiel in der runden Hülse sitzenden eckigen Köcher 48 mit Ventilkörper 14 vorbei durch das untere Hülsenende 24, die Schraubenfeder 16, die Stopfenbohrung 26 und das Rohr 18 von oben nach unten in die unterhalb des Ventils zu denkende Tiertränke einströmen kann.

Soll die Ventilbetätigung verhindert werden, wird der Ring 39 auf dem Verlängerungsabschnitt 60 nach oben verschoben und auf den Hülsenbund 32 geschraubt. Dadurch wird die Beweglichkeit des Rohres 18 mit Verlängerung 58 solange aufgehoben, bis der Ring 39 zurückgeschraubt ist.

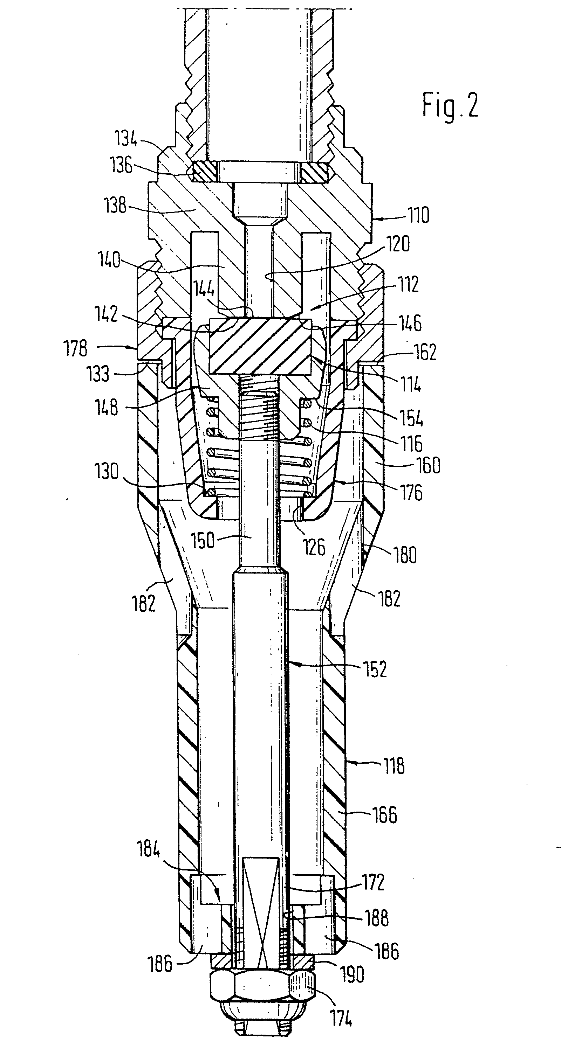

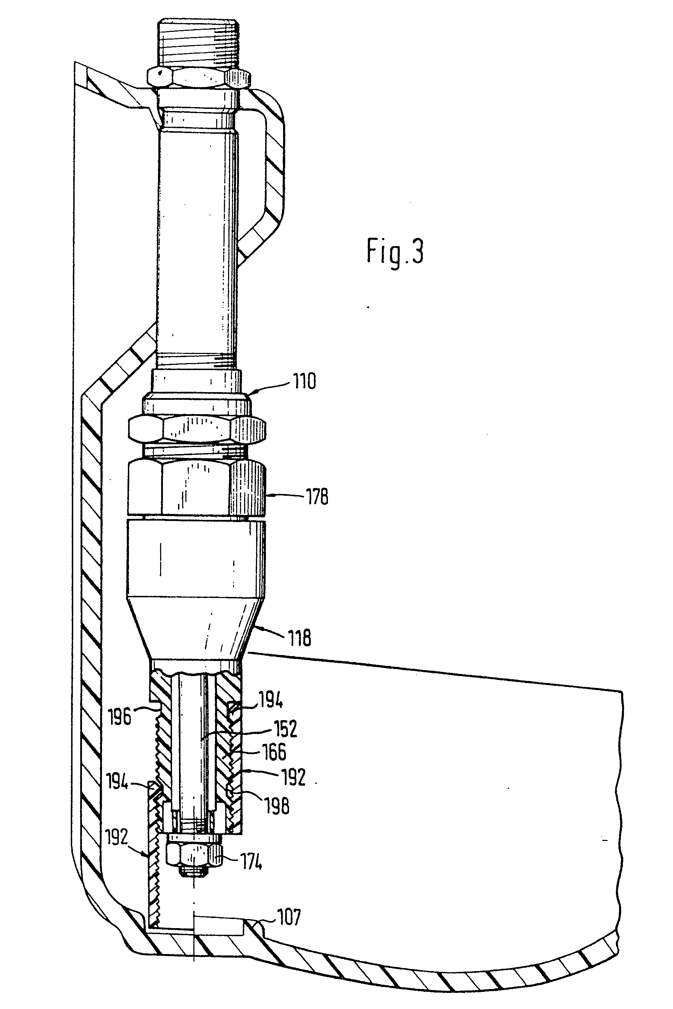

Die zweite Ausführungsform des erfindungsgemässen Ventiles ist nach Fig. 2 und 3 der ersten Ausführungsform im grossen und ganzen ähnlich. Soweit im folgenden nichts anderes angegeben ist, trifft die Beschreibung der ersten Ausführungsform im wesentlichen auch auf die zweite Ausführungsform zu, deren Teile, falls sie Teilen der ersten Ausführungsform gleichen oder entsprechen, mit um 100 höheren Bezugszahlen bezeichnet sind.

Statt des Stopfens 28 ist ein Federgehäuse 176 vorgesehen, das axial an die Hülse 110 angeflanscht ist und von einer auf die Hülse geschraubten Überwurfmutter 178 gehalten wird, welche die untere Aussenschulter 133 zur Abstützung des Ventilbetätigungsrohres 118 aufweist und den Aussenbund 32 ersetzt. Das Rohr 118 ist mit seiner Verlängerung 58 einstückig aus Kunststoffmaterial gefertigt. Anstelle der Schraubverbindung des oberen Rohrendes (22) mit dem unteren Verlängerungsabschnitt (56) weist das Rohr 118 ein gekröpftes Übergangsstück 180 auf, das den die obere Stirnfläche 162 besitzenden oberen Rohrabschnitt 160 mit dem schlankeren unteren Rohrende 166 verbindet und mit mehreren gleichmässig auf den Rohrumfang verteilten achsparallelen Bohrungen 182 versehen ist, durch die aus der Bohrung 126 des Federgehäuses 176 strömendes Wasser aus dem Rohrinneren ins Freie gelangt. Dieses Wasser durchströmt hauptsächlich das untere Rohrende 166, das mit einer abschliessenden Nabe 184 versehen ist, die ebenfalls mehrere gleichmässig auf den Rohrumfang verteilte achsparallele Bohrungen 186 aufweist. Die Nabe 184 besitzt einen zentralen Durchbruch 188 mit unrundem Querschnitt, welcher das mit entsprechendem Querschnitt versehene untere Ende 172 der Achse 152 drehfest aufnimmt, auf welches die Stellmutter 174 geschraubt ist, die über einen Sicherungsring 190 an der Nabe 184 von aussen angreift.

Die Wirkungsweise der beschriebenen zweiten Ausführungsform ist gleich jener der ersten Ausführungsform mit dem Unterschied, dass Wasser wie gesagt zusätzlich aus den Bohrungen 182 strömt.

Um die zweite Ausführungsform ausser Betrieb setzen zu können, ist ihr Ventilbetätigungsrohr 118 mit einem aufgeschraubten Stutzen 192 aus Kunststoffmaterial versehen, welcher an seinem ventilnahen oberen Ende eine radial innere Ringrippe 194 aufweist, die wahlweise in zwei axial gegeneinander versetzte, radial äussere Nuten 196 beziehungsweise 198 im unteren Rohrende 166 einschnappen können. In seiner in Fig. 3 zur Hälfte links dargestellten wirksamen Stellung greift der Stutzen 192 mit seinem unteren freien Ende in eine Bodenvertiefung einer mit der zweiten Ausführungsform versehenen Tiertränke ein, wobei die Berandung der Vertiefung eine ortsfeste Ringfassung 107 für den radial beweglichen Stutzen 192 darstellt.

Aus Fig. 3 ist ersichtlich, dass die zweite Ausführungsform (ebenso wie die erste) an der Rückwand der Tiertränke vertikal aufgehängt ist. Demgegenüber sind die dritte und vierte Ausführungsform des erfindungsgemässen Ventiles für eine waagrechte Anordnung bestimmt.

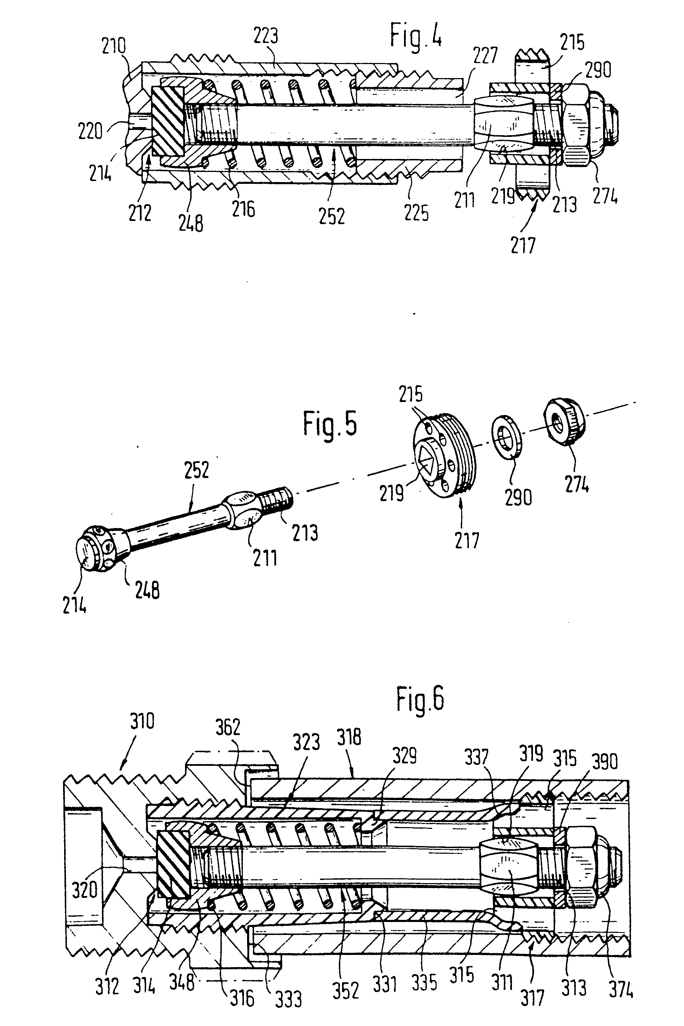

Eine dritte und vierte Ausführungsform des erfindungsgemässen Ventiles bestehen nach Fig. 4 und 5 beziehungsweise 6 hauptsächlich aus einer kreiszylindrischen Hülse 210 beziehungsweise 310 mit Ventilsitz 212 beziehungsweise 312, aus einem mit diesem zusammenwirkenden Ventilkörper 214 beziehungsweise 314, der von einer Schraubenfeder 216 beziehungsweise 316 beaufschlagt wird, und aus einem kreiszylindrischen, glatten Rohr 318 zur Ventilbetätigung. Die Hülse, eine Bohrung 220 beziehungsweise 320 des Ventilsitzes, der kreisscheibenförmige Ventilkörper, die Schraubenfeder und das Rohr sind koaxial beziehungsweise kolinear angeordnet. Das gilt auch für eine das Rohr 218 beziehungsweise 318 zentral durchsetzende Achse 252 beziehungsweise 352, deren in der Zeichnung linkes hinteres Ende in einen den Ventilkörper tragenden Köcher 248 beziehungsweise 348 geschraubt ist sowie die sich am Köcher abstützende Schraubenfeder aufnimmt, und deren in der Zeichnung rechtes vorderes Ende einen vierkantigen Abschnitt 211 beziehungsweise 311 sowie einen abschliessenden Gewindeabschnitt 213 beziehungsweise 313 aufweist. Auf dem vierkantigen Abschnitt sitzt eine mit mehreren gleichmässig auf den Rohrumfang verteilten Bohrungen 215 beziehungsweise 315 versehene Kreisscheibe 217 beziehungsweise 317 mit ihrem zentralen, vierkantigen Durchbruch 219 beziehungsweise 319. Die Scheibe ist mit ihrem äusseren Umfang in das in der Zeichnung rechte vordere Ende des Rohres eingeschraubt und gewährt dem Wasser dank ihrer Bohrungen Durchlass. Auf den Gewindeabschnitt der Achse ist eine Stellmutter 274 beziehungsweise 374 geschraubt, die über einen Sicherungsring 290 beziehungsweise 390 von aussen an der Scheibe angreift, die im Rohr axial festliegt. Der in der Zeichnung linken hinteren Stirnfläche 362 steht eine in der Zeichnung nach rechts weisende, ebenfalls ringförmige Innenschulter 333 der Hülse mit Spiel gegenüber, welche das benachbarte Rohrende aussen umfasst.

Bei der dritten Ausführungsform gemäss Fig. 4 und 5 ist in die Hülse 210 ein rohrförmiges Federgehäuse 223 koaxial eingeschraubt, das mit seiner aus der Hülse herausragenden Hälfte in das Ventilbetätigungsrohr hineinragt und an seinem vorderen Ende mit einer eingeschraubten Druckschraube 225 versehen ist, an der sich das dem Köcher 248 abgewandte Ende der Schraubenfeder 216 abstützt. Zwischen der Druckschraube 225 und der Achse 252 besteht ein ausreichend grosser Ringraum 227 für den Wasserdurchfluss. Durch axiales Verstellen der Druckschraube 225 kann die Schliesskraft des Ventils verändert werden. Bei der vierten Ausführungsform gemäss Fig. 6 ist ebenfalls in die Hülse 310 ein rohrförmiges Federgehäuse 323 eingeschraubt, das aber an seinem vorderen Ende einen feststehenden Innenflansch 329 aufweist, an dem sich die Schraubenfeder 316 abstützt und der auf seiner Aussenseite mit einer ringförmigen Eckaussparung 331 versehen ist, die das hintere Ende eines Schlauchstükkes 335 aufnimmt, dessen vorderes Ende auf einem an die Scheibe 317 axial innen angeformten axialen Vorsprung 337 sitzt, durch den die Bohrungen 315 gehen, so dass bei geöffnetem Ventil in das Federgehäuse 323 eintretendes und durch dessen Innenflansch 329 austretendes Wasser vom Schlauchstück 333 geleitet durch die Scheibenbohrungen 315 über das vordere Ende des Rohres 318 ins Freie gelangt, welches den Gewindeabschnitt 313 der Achse 352 und die Stellmutter 374 aufnimmt.

Die Wirkungsweise der dritten und vierten Ausführungsform ist übereinstimmend im wesentlichen dieselbe wie diejenige der ersten und zweiten Ausführungsform; ein Unterschied zu diesen besteht aber insofern, als die Abstützstelle, an der sich die Rohrstirnfläche und die Hülsenschulter bei Auslenkung des Rohres berühren, einen geringeren radialen Achsabstand hat und noch innerhalb der Hülse liegt.

Bei allen vier Ausführungsformen kann mittels der Stellmutter, indem diese gelockert wird, das Ventil abgestellt werden, oder aber eine Einstellung gefunden werden, bei der das Ventil einen bestimmten Durchfluss ergibt oder zur Abgabe von Lockwasser nur tropft.

**Patentansprüche**

1. Gegen den Wasserdruck schliessendes Ventil (12, 14) für Tiertränken, mit kolinearer Anordnung einer an der Tränke befestigbaren Hülse (10) für den Wasserzulauf, welche mit einem ringförmigen Ventilsitz (12) und einer axialen ringförmigen Aussenschulter (33) versehen ist, deren Durchmesser grösser sind als die Durchmesser des Ventilsitzes (12); und eines Ventilbetätigungsrohres (18) für den Wasserablauf, welches einen federbelasteten Ventilkörper (14) trägt, der infolge seitlichen Auslenkens des hülsenfernen Rohrendes (66) durch Kippen vom Ventilsitz (12) ahbebt, dadurch gekennzeichnet, dass die schulternahe Stirnfläche (62) des Rohres (8) an der Aussenschulter (33) axial abstützbar ist.

2. Ventil nach Anspruch 1, dadurch gekennzeichnet, dass die Hülse (10) mit einem die Aussenschulter (33) bildenden Aussenbund (32) und das Rohr (18) mit einer bezüglich der Hülse (10) koaxialen, diese radial umfassenden Verlängerung (58) versehen ist, deren bundnahe Stirnfläche (62) auf dem Bund (32) abstützbar ist.

3. Ventil nach Anspruch 2, dadurch gekennzeichnet, dass der Aussenbund (32) der Hülse (10) axial auf der Ventilkörperseite des Ventilsitzes (12) angeordnet ist.

4. Ventil nach Anspruch 2 oder 3, dessen Ventilbetätigungsrohr eine den Ventilkörper (14) tragende, koaxiale Achse (52) aufnimmt, dadurch gekennzeichnet, dass das Rohr (18) zur Einstellung des Spielraumes zwischen Bund (32) und Rohrstirnfläche (62) axial verstellbar auf der Achse (52) gelagert ist.

5. Ventil nach einem der Ansprüche 2 bis 4, dessen Ventilkörper (14) eine ebene, kreisförmige Anlagefläche (44) und dessen Ventilsitz eine ringförmige Dichtfläche (42) aufweist, dadurch gekennzeichnet, dass der Ventilsitz (12) mit einer axial neben der Dichtfläche (42) liegenden, ringförmigen Aussparung (46) zur Aufnahme des Randes der Anlagefläche (44) vesehen ist.

6. Ventil nach Anspruch 4 oder 5, dadurch gekennzeichnet, dass eine auf Druck beanspruchte, vorgespannte Schraubenfeder (16) auf der Achse (52) zwischen einem von der Achse durchquerten Stopfen (28), der an das rohrnahe Ende (24) der Hülse (10) geschraubt ist, und einem den Ventilkörper (14) aufnehmenden Köcher (48) angeordnet ist, welcher am hülsennahen Ende (50) der Achse befestigt ist.

7. Ventil nach einem der Ansprüche 2 bis 6, dadurch gekennzeichnet, dass das Rohr (118) und seine Verlängerung (160) durch ein gekröpftes Übergangsstück (180) miteinander verbunden sind, welches achsparallele Bohrungen (182) flankierenden Wasserablauf aufweist.

8. Ventil nach einem der Ansprüche 4 bis 7, dadurch gekennzeichnet, dass das Rohr (118) drehfest auf der Achse (152) gelagert und die Achse mit einem Gewinde versehen ist, auf das eine am Rohr angreifende Stellmutter (174) geschraubt ist.

9. Ventil nach einem der Ansprüche 1 bis 5, 7 und 8, dadurch gekennzeichnet, dass die Hülse (110) mit einer Überwurfmutter (178) versehen ist, an welcher eine Aussenschulter (133) ausgebildet ist, und dass die Überwurfmutter (178) ein an die Hülse (110) axial angeflanschtes Federgehäuse (176) festlegt, das eine wendelförmige Ventilfeder (116) aufnimmt.

10. Ventil nach einem der Ansprüche 1 bis 9, dadurch gekennzeichnet, dass das Rohr (118) mit einem aufgeschraubten Stutzen (192) versehen ist, der zwischen einer wirksamen Stellung, in der er in eine ortsfeste Ringfassung (107) axial eingreift, und einer unwirksamen Stellung bewegbar ist, in welcher er von der Ringfassung axial zurückgezogen ist.

11. Ventil nach Anspruch 10, dadurch gekennzeichnet, dass der Stutzen (192) aus Kunststoffmaterial besteht und an seinem ventilnahen Ende mit einer radial inneren Ringrippe (194) versehen ist, die in der wirksamen und unwirksamen Stutzenstellung jeweils in eine radial äussere Nut (198 beziehungsweise 196) des Rohres (118) radial entspannt eingreift.

12. Ventil nach Anspruch 1, dadurch gekennzeichnet, dass die Hülse (310) eine Innenschulter (333) aufweist und das sich an dieser abstützende Rohrende radial umfasst.

13. Ventil nach einem der Ansprüche 8 bis 12, dadurch gekennzeichnet, dass in das hülsenferne Rohrende eine achsparallel durchbrochene Scheibe (317) mit einem zentralen, von der kreiszylindrischen Form abweichenden axialen Durchbruch (319) eingeschraubt ist, in den die Achse (352) drehfest eingreift, und dass die Stellmutter (374) an der Scheibe (317) angreift.

14. Ventil nach einem der Ansprüche 1 bis 5, 7, 8 und 10 bis 13, gekennzeichnet durch ein eine wendelförmige Ventilfeder (316) aufnehmendes, in die Hülse (310) geschraubtes Federgehäuse (323).

15. Ventil nach den Ansprüchen 13 und 14, dadurch gekennzeichnet, dass das Federgehäuse (323) und der Rand der Scheibe (317) mittels eines Schlauchstückes (335) wasserleitend miteinander verbunden sind.

16. Ventil nach Anspruch 14 oder 15, dadurch gekennzeichnet, dass das Ventilgehäuse (223) an seinem hülsenfernen Ende mit einer axial versetzbar angeschraubten, durchbrochenen Druckschraube (225) versehen ist, an der sich eine Ventilfeder (216) abstützt.

17. Ventil nach einem der Ansprüche 8 bis 16, dadurch gekennzeichnet, dass die Stellmutter (374) innerhalb des Rohres (318) angeordnet ist.

**Claims**

1. Valve (12, 14) for a water trough, closing against hydraulic pressure and having a colinear arrangement of a sleeve (10) for the inflow of water, designed to be fixed to the trough and provided with an annular valve seat (12) and an axial, annular external shoulder (33) the diameter of which is greater than the diameters of the valve seat (12); and of a valve actuating tube (18) for the outflow of water, which tube (18) carries a spring loaded valve body (14) which is lifted off the valve seat (12) by a tipping movement resulting from lateral deflection of that end (66) of the tube which is remote from the sleeve, characterised in that a frontal surface (62) of the tube (18), which is close to the shoulder, is axially supportable against the external shoulder (33).

2. Valve according to claim 1, characterised in that the sleeve (10) has an external collar (32) forming the external shoulder (33) and that the tube (18) has an extension (58) which is coaxial with the sleeve (10) and radially embraces said sleeve, that frontal surface (62) of the extension (58), which is close to the collar being supportable against the collar (32).

3. Valve according to claim 2, characterised in that the external collar (32) of the sleeve (10) is arranged axially on the side of the valve seat (12), which faces the valve body.

4. Valve according to claim 2 or claim 3, in which the valve actuating tube receives a coaxial shaft (52) carrying the valve body (14), characterised in that the tube (18) is mounted to be axially adjustable on the shaft (52) for adjusting the clearance between the collar (32) and the frontal surface (62) of the tube.

5. Valve according to one of the claims 2 to 4, in which the valve body (14) has a flat, circular contact surface (44) and its valve seat has an annular sealing surface (42), characterised in that the valve seat (12) has an annular recess (46) axially situated adjacent to the sealing surface (42) and provided for receiving the edge of the contact surface (44).

6. Valve according to claim 4 or claim 5, characterised in that a prestressed helical compression spring (16) is provided on the shaft (52) between a plug (28) which is traversed by the shaft and screwed to that end (24) of the sleeve (10), which is near the tube, and a casing (48) which receives the valve body (14) and is fixed to the end (50) of the shaft, which is near the sleeve.

7. Valve according to one of the claims 2 to 6, characterised in that the tube (118) and its extension (160) are joined together by an offset transition member (180) which has axially parallel bores (182) for the outflow of water along the sides.

8. Valve according to one of the claims 4 to 7, characterised in that the tube (118) is non-rotatably fixed on the shaft (152) and the shaft has a threading on which is screwed an adjustment nut (174) acting on the tube.

9. Valve according to one of the claims 1 to 5, 7, and 8, characterised in that the sleeve (110) is provided with a coupling nut (178) on which an external shoulder (133) is formed, and in that the coupling nut (178) secures a spring housing (176) which is axially flanged to the sleeve (110) and receives a helical valve spring (116).

10. Valve according to one of the claims 1 to 9, characterised in that the tube (118) has a connecting piece (192) screwed to it, which connecting piece (192) is displaceable between an operative position in which it engages axially with a positionally fixed ring fitting (107), and an inoperative position in which it is axially withdrawn from the ring fitting.

11. Valve according to claim 10, characterised in that the connecting piece (192) is made of a plastics material and has a radial internal annular ridge (194) at its end near the valve, which ridge engages, in the operative and the inoperative position of the connecting piece, with an external radial groove (198 and 196, respectively) of the tube (118) in such a manner as to be free from radial tension.

12. Valve according to claim 1, characterised in that the sleeve (310) has an internal shoulder (333) and radially embraces the end of the tube, bearing against said internal shoulder (333).

13. Valve according to one of the claims 8 to 12, characterised in that a disc (317) perforated parallel to the axis, is screwed into the end of the tube, remote from the sleeve, which disc (317) has a central, axial, noncircular-cylindrical opening (319) in which the shaft (352) engages non-rotatably, and in that the adjusting nut (374) acts on the disc (317).

14. Valve according to one of the claims 1 to 5, 7, 8 and 10 to 13, characterised by a spring housing (323) screwed into the sleeve (310) and containing a helical valve spring (316).

15. Valve according to claims 13 and 14, characterised in that the spring housing (323) and the edge of the disc (317) are joined together to conduct water by means of a piece of flexible tube (335).

16. Valve according to claim 14 or claim 15, characterised in that a perforated set screw (225) is screwed to be axially displaceable to the valve housing (223) at the end of said housing, remote from the sleeve, the valve spring (216) bearing against said screw (225).

17. Valve according to one of the claims 8 to 16, characterised in that the adjustment nut (374) is situated inside the tube (318).

**Revendications**

1. Soupape (12, 14) pour abreuvoir à fermeture s'opposant à la pression hydraulique comportant, en disposition colinéaire, une douille (10) d'admission d'eau fixée à l'abreuvoir et munie d'un siège de soupape annulaire (12) et d'un épaulement externe annulaire axial (33) dont le diamètre est supérieur aux diamètres du siège de soupape (12); et un tube d'actionnement de soupape (18) pour l'écoulement de l'eau, portant un corps de soupape (14) chargé par ressort et se soulevant du siège de soupape (12) par basculement sous l'effet d'une déviation latérale de l'extrémité (66) du tube éloignée de la douille, caractérisée en ce que la surface frontale (62) du tube (18), proche de l'épaulement peut venir axialement en appui contre l'épaulement externe (33).

2. Soupape selon la revendication 1, caractérisée en ce que la douille (10) comporte un collet externe (32) formant l'épaulement externe (33) et le tube (18) comporte un prolongement (58) coaxial par rapport à la douille (10) et l'entourant radialement, dont la surface frontale (62) proche du collet peut venir en appui contre le collet (32).

3. Soupape selon la revendication 2, caractérisée en ce que le collet externe (32) de la douille (10) est disposé axialement sur la partie du siège de soupape (12), située du côté du corps de soupape.

4. Soupape selon la revendication 2 ou 3, dont le tube d'actionnement de soupape reçoit un axe coaxial (52) portant le corps de soupape (14), caractérisée en ce que le tube (18) est monté de manière à pouvoir être déplacé axialement sur l'axe (52), afin de régler le jeu entre le collet (32) et la surface frontale (62) du tube.

5. Soupape selon l'une quelconque des revendications 2 à 4, dont le corps de soupape (14) présente une surface d'appui circulaire plane (44) et dont le siège de soupape comporte une surface d'étanchéité annulaire (42), caractérisée en ce que le siège de soupape (12) est pourvu d'un évidement annulaire (46) ménagé axialement à proximité de la surface d'étanchéité (42), en vue de recevoir le bord de la surface d'appui (44).

6. Soupape selon la revendication 4 ou 5, caractérisée en ce qu'un ressort hélicoïdal (16) précontraint et sollicité en compression est disposé sur l'axe (52), entre un bouchon (28) qui est traversé par l'axe et qui est vissé dans l'extrémité (24) de la douille (10) proche du tube, et un berceau (48) recevant le corps de soupape (14), ce berceau étant fixé à l'extrémité (50) de l'axe, proche de la douille.

7. Soupape selon l'une quelconque des revendications 1 à 6, caractérisée en ce que le tube (118) et son prolongement (160) sont mutuellement reliés par un élément de transition coudé (180) qui présente des alésages (182) parallèles à l'axe en vue de l'écoulement de l'eau par les flancs.

8. Soupape selon l'une quelconque des revendications 4 à 7, caractérisée en ce que le tube (118) est immobilisé en rotation sur l'axe (152) et l'axe est pourvu d'un filetage sur lequel est vissé un écrou de réglage (174) s'appliquant contre le tube.

9. Soupape selon l'une quelconque des revendications 1 à 5, 7 et 8, caractérisée en ce que la douille (110) est pourvue d'un écrou d'accouplement (178), sur lequel est formé un épaulement externe (133) et en ce que l'écrou d'accouplement (178) maintient un boîtier de ressort (176) qui est axialement disposé contre la douille (110) par une bride, et qui reçoit un ressort de soupape hélicoïdal (116).

10. Soupape selon l'une quelconque des revendications 1 à 9, caractérisée en ce que le tube (118) est pourvu d'un manchon vissé (192) apte à être déplacé entre une position active dans laquelle il vient s'engager axialement dans une monture annulaire fixe (107) et une position inactive dans laquelle il est rappelé axialement de la monture annulaire.

11. Soupape selon la revendication 10, caractérisée en ce que le manchon (192) est en matière synthétique et est doté à son extrémité proche de la soupape d'une nervure annulaire intérieure radiale (194) qui, dans les positions active et inactive du manchon pénètre radialement et sans tension dans une gorge extérieure radiale (198 ou 196) du tube (118).

12. Soupape selon la revendication 1, caractérisée en ce que la douille (310) présente un épaulement intérieur (333) et entoure radialement l'extrémité du tube s'appuyant contre ledit épaulement.

13. Soupape selon l'une quelconque des revendications 8 à 12, caractérisée en ce que dans l'extrémité du tube éloignée de la douille, est vissé un disque (317) ajouré parallèlement à l'axe et comportant un perçage axial central (319) s'écartant de la forme cylindrique circulaire et dans lequel l'axe (352) est engagé tout en étant immobilisé en rotation, et en ce que l'écrou de réglage (374) s'applique contre le disque (317).

14. Soupape selon l'une quelconque des revendications 1 à 5, 7, 8, et 10 à 13, caractérisée par un boîtier de ressort (323) vissé dans la douille (310) et recevant un ressort de soupape hélicoïdal (316).

15. Soupape selon les revendications 13 et 14, caractérisée en ce que le boîtier de ressort (323) et le bord du disque (317) sont mutuellement reliés au moyen d'une pièce tubulaire (335) en vue d'assurer l'écoulement de l'eau.

16. Soupape selon la revendication 14 ou 15, caractérisée en ce que le boîtier de soupape (223) est pourvu à son extrémité éloignée de la douille d'une vis de compression (225) ajourée et vissée afin d'être déplaçable axialement, et contre laquelle le ressort de soupape (216) vient en appui.

17. Soupape selon l'une quelconque des revendications 8 à 16, caractérisée en ce que l'écrou de réglage (374) est disposé à l'intérieur du tube (318).

0097769

Fig.1

0097769

Fig.2

Fig.3

Fig.4

210 223 227 215 290

220

214

212 248 216 252 225 211 219 213 274

217

Fig.5

215

252

219 290

217 274

214 248 211 213

Fig.6

310 362 323 318 329 337 319 315 390

320

312 314 348 316 333 352 331 335 315 311 317 313 374